# EUROPÄISCHE PATENTSCHRIFT

(11) **EP 1 129 886 B1**
(45) Veröffentlichungstag und Bekanntmachung des Hinweises auf die Patenterteilung: **04.04.2007**
(21) Anmeldenummer: 00125276.6
(22) Anmeldetag: 27.11.2000
(51) Int. Cl.: B60K 37/06

(54) **Elektrisches Schaltelement für ein Kraftfahrzeug mit separatem Symbolfeld**
Electrical switching element for motor vehicle with separate symbol zone
Elément commutateur éléctrique pour automobile avec zone de symbole distincte

(30) Priorität: 04.03.2000 DE 10010740
(43) Veröffentlichungstag der Anmeldung: 05.09.2001
(73) Patentinhaber: Valeo Schalter und Sensoren GmbH, 74321 Bietigheim-Bissingen (DE)
(72) Erfinder: Weber, Adam, 74321 Bietigheim-Bissingen (DE); Fein, Berthold, 74321 Bietigheim-Bissingen (DE)
(74) Vertreter: Dreiss, Fuhlendorf, Steimle & Becker

(56) Entgegenhaltungen:
- DE-A- 3 015 288
- DE-A- 4 026 290
- DE-A- 4 229 756
- DE-C- 821 017
- DE-U- 1 865 169
- GB-A- 783 906

## Beschreibung

Die Erfindung betrifft einen Schalter zum Schalten elektrischer Ströme in einem Kraftfahrzeug nach dem Oberbegriff des Anspruchs 1.

Derartige Schalter werden beispielsweise im Armaturenbrett von Kraftfahrzeugen in sehr großen Stückzahlen eingesetzt. Wegen der günstigen Herstellungskosten sind die Hersteller solcher Schalter daran interessiert, diese in gleicher Ausführung in sehr großen Stückzahlen herzustellen. Allerdings sind bei den Käufern solcher Schalter, wie beispielsweise den Herstellern von Kraftfahrzeugen, gegenläufige Tendenzen vorhanden: Trotz großer Stückzahlen werden die Kraftfahrzeuge immer individueller auf die Wünsche des Kunden zugeschnitten.

Um dieses Dilemma zwischen hohen Stückzahlen von Schaltern gleicher Bauart einerseits und dem Wunsch der Käufer nach individuellen Gestaltungen der Schalter andererseits aufzulösen, ist es bekannt, einen Schalter mit einem auswechselbaren Bedienelement zu versehen. Auf der Seite 308 des Katalogs März/August 1996 der RS Components GmbH, Hessenring 13 b, 64546 Mörfelden-Walddorf, wird ein Netzschalter (Bestellnr. 664-165) angeboten, für den verschiedene Drucktaster oder Linsen angeboten werden. Nachteilig an dieser Bauweise ist, dass das Bedienelement lösbar mit dem Schalter verbunden ist und somit der Schalter funktionsunfähig wird, wenn das Bedienelement von dem Schalter gelöst wird.

Aus der DE 1 865 169 ist ein Drucktaster bekannt, bei dem an einem Bedienelement ein Symbolfeld angeordnet ist, welches als separates Bauteil ausgeführt ist.

Aus der gattungsgemäßen DE 42 29 756 A1 ist ein elektrischer Schalter bekannt, bei dem das Bedienelement verriegelt werden kann. Allerdings ist dieser Schalter nur für eine bestimmte Verwendung einsetzbar, da kein auswechselbares Symbolfeld vorhanden ist.

Der Erfindung liegt die Aufgabe zugrunde, einen Schalter zum Schalten elektrischer Ströme bereitzustellen, welches einerseits in sehr großen Stückzahlen hergestellt werden kann und andererseits bezüglich Funktionalität und Gestaltung an individuelle kundenspezifische Vorgaben adaptierbar ist.

Diese Aufgabe wird erfindungsgemäß bei einem Schalter nach dem Oberbegriff des Anspruchs 1 mit den kennzeichenden Merkmalen des Anspruchs 1 gelöst.

Dadurch kann, ohne Schaltelement und Bedienelement voneinander zu trennen, durch Auswechseln des Symbolfelds die Gestaltung des Schaltelements verändert werden und es ist einerseits möglich, Schaltelement und Bedienelement in größten Stückzahlen herzustellen und Schaltelement und Bedienelement während des Herstellungsprozesses miteinander zu einer funktionsfähigen Einheit zusammenzufügen.

Andererseits ist es möglich, durch Ändern des Symbolfelds das Erscheinungsbild des erfindungsgemäßen Schaltelements individuell an die Wünsche des Kunden anzupassen und somit eine höhere Akzeptanz beim Kunden zu erreichen. Durch die Änderung des Symbolfelds kann das technisch identische Schaltelement an verschiedene Kunden mit unterschiedlichem Design verkauft werden.

Durch das oder die erfindungemäßen Verriegelungsmittel wird die unbeabsichtigte Betätigung des Schalter wirksam unterbunden. Die Verriegelungsmittel können die Schaltbewegung des Schaltelements sperren, so dass eine unbeabsichtigte Betätigung des Schaltelements unterbunden wird.

Alternativ können die Verriegelungsmittel so ausgestaltet sein, dass mit dem Anbringen des Symbolfelds die endgültige Funktion des Schaltelements passend zum Symbolfeld festgelegt wird. Dadurch kann ein mehrere Funktionsvarianten aufweisendes Schaltelement in noch größeren Stückzahlen hergestellt werden und die Funktion des Schaltelements erst durch das Anbringen des Symbolfelds festgelegt werden.

In Ergänzung der Erfindung ist vorgesehen, das Symbolfeld durch eine Schnappverbindung mit dem Bedienelement oder dem Schaltelement zu verbinden, so dass ohne besondere Werkzeuge und auf einfachste Weise die Verbindung von Symbolfeld und Bedienelement hergestellt oder wieder gelöst werden kann.

Eine Variante der Erfindung sieht vor, dass das Symbolfeld lösbar mit dem Bedienelement oder dem Schaltelement verbunden ist, so dass auch während der Lebensdauer des Schalters durch Austausch des Symbolfelds das Erscheinungsbild des Schalters verändert werden kann. Dadurch ist es beispielsweise möglich, bei gebrauchten Kraftfahrzeugen durch Austausch des Symbolfelds einen neuwertigen optischen Eindruck und/oder ein moderneres Aussehen der Schalter zu erreichen.

In Ergänzung der Erfindung ist vorgesehen, dass der Schalter ein Wippschalter ist und/oder dass der Schalter tastend ausgeführt ist, so dass der erfindungsgemäße Schalter für verschiedenste Zwecke einsetzbar ist.

In weiterer Ausgestaltung der Erfindung sind das Symbolfeld und/oder das Bedienelement beleuchtbar, so dass auch in der Dunkelheit der erfindungsgemäße Schalter erkannt und einfach bedient werden kann.

Bei einer anderen Ausgestaltung der Erfindung erstreckt sich das Symbolfeld mindestens nahezu über die gesamte Länge des Bedienfelds, so dass ausreichend Platz für die Darstellung eines oder mehrerer Symbole, welche auf die Funktion des Schalters hinweisen, vorhanden ist. Außerdem ergibt sich durch die längliche Gestaltung des Symbolfelds ein elegantes und gestrecktes Aussehen des erfindungsgemäßen Schalters.

Weitere Vorteile und vorteilhafte Ausgestaltungen der Erfindung sind der Zeichnung und deren Beschreibung sowie den nachfolgenden Patentansprüchen entnehmbar.

Es zeigen :
- Fig. 1:: ein nicht erfindungsrelevanten Schalter in perspektivischer Darstellung;
- Fig. 2:: mehrere nicht erfindungsrelevante Schalter, teilweise mit abgenommenem Symbolfeld;
- Fig. 3:: eine nicht erfindungsrelevante Ansicht mehrerer Schalter; und
- Fig. 4:: eine perspektivische Ansicht eines erfindungsgemäßen Schalters mit Verriegelung.

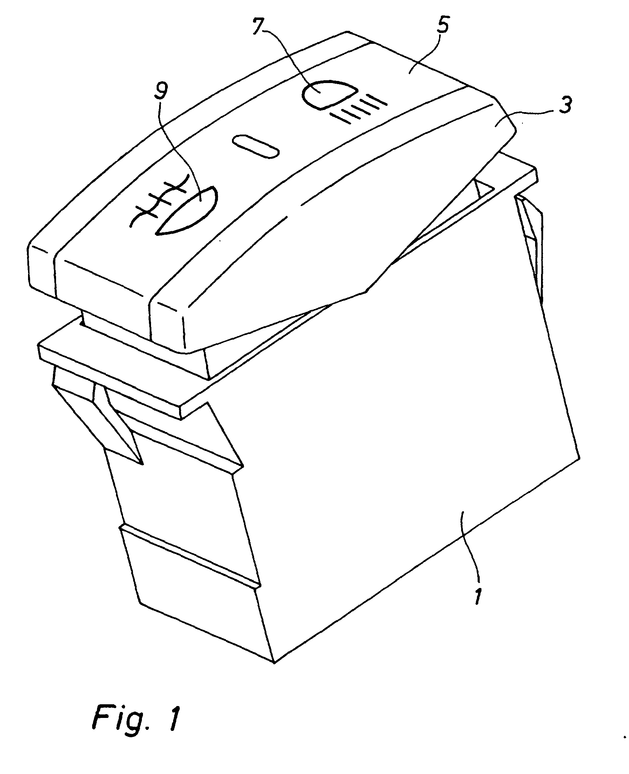

In Fig. 1 ist ein Schalter mit einem Schaltelement 1 dargestellt. Der Schalter weist ein Bedienelement 3 auf, welches in verschiedene Schaltstellungen gebracht werden kann. Auf der Oberseite des Bedienelements 3 ist ein sich über die gesamte Länge des Bedienfelds 3 erstreckendes Symbolfeld 5 angebracht. Das Symbolfeld 5 enthält ein Symbol 7 z. B. für die Funktion "a" eines Kraftfahrzeugs und ein Symbol 9 z. B. für die Funktion "b" eines Kraftfahrzeugs. In der in Fig. 1 dargestellten mittleren Schaltstellung des Schaltelements 1 können die Funktionen "a" und/oder "b" je nach Ausführung des Schaltelements ausgeschaltet sein. Wenn der Benutzer des Kraftfahrzeugs auf das Bedienelement 3 im Bereich des Symbols 7 drückt, wird z. B. die Funktion "a" Fahrlicht eingeschaltet; wenn er das Bedienelement 3 im Bereich des Symbols 9 drückt, wird z. B. die Funktion "b" eingeschaltet. Derartige Symbole wurden bislang beispielsweise durch Tampondruck, Prägefolie, Lasern od. dgl. direkt auf das Bedienelement 3 aufgebracht. Damit geht die Notwendigkeit einher, bei der Herstellung des Schalters die Funktion des erfindungsgemäßen Schalters festzulegen. Außerdem ist die vom Benutzer des Kraftfahrzeugs wahrnehmbare äußere Gestalt des Schalters mit dem Aufdrucken der Symbole endgültig festgelegt.

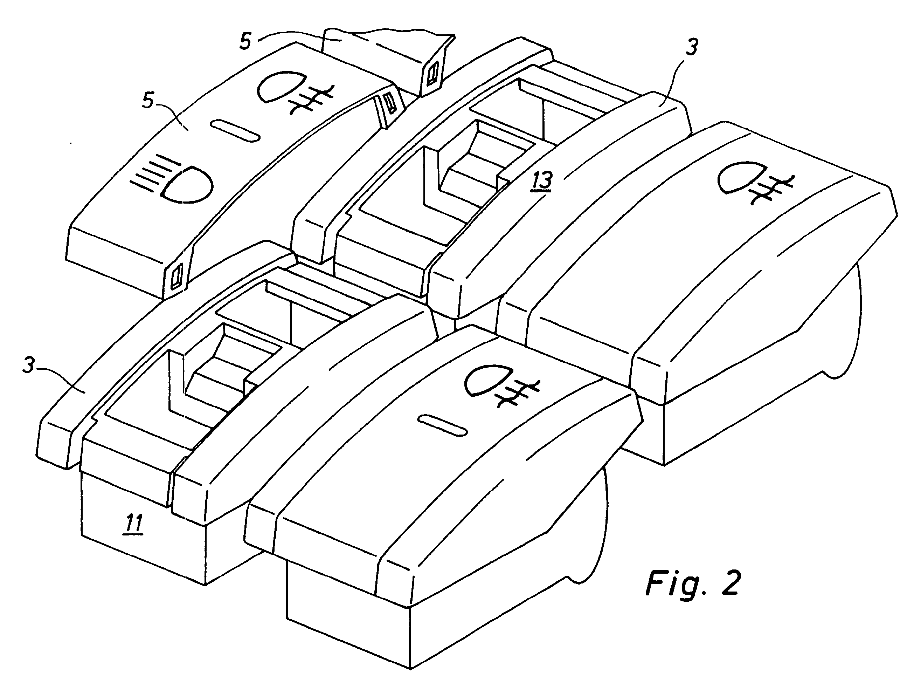

In Fig. 2 sind mehrere Schalter perspektivisch dargestellt. Die Schaltelemente 11 und 13 weisen keine Symbolfelder auf den Bedienelementen 3 auf. In einer Explosionsdarstellung sind die Symbolfelder 5 über den zugehörigen Schaltelementen 11 und 13 dargestellt. Aus dieser Darstellung wird deutlich, dass die Funktion des erfindungsgemäßen Schaltelements 11 und 13 erst durch das Anbringen der Symbolfelder 5 mit festgelegt wird. Insofern kann der erfindungsgemäße Schalter in größten Stückzahlen kontinuierlich hergestellt werden, und erst mit dem Eingang eines Auftrags wird die Funktion des Schalters festgelegt, indem das entsprechende Symbolfeld 5 auf dem Schaltelement 11 oder 13 angebracht wird. Die Verbindung von Symbolfeld 5 und Bedienelement 3 kann durch eine lösbare oder unlösbare Verbindung erreicht werden.

Es ist naturgemäß auch denkbar, dass der Käufer des Schalters die Symbolfelder 5 selbst gestaltet und auch selbst herstellt. Es ergibt sich auch eine Standardisierung der Schalter eines Kraftfahrzeugs insofern, als der gleiche Schalter für verschiedene Funktionen einsetzbar ist und es lediglich durch ein anderes Symbolfeld 5 adaptiert werden muss.

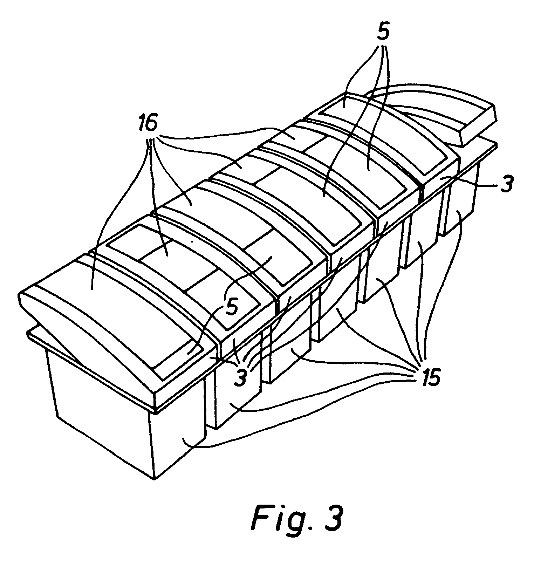

In Fig. 3 ist eine Reihe möglicher nebeneinander angeordneter Schaltelemente 15 perspektivisch dargestellt. Bei diesen Schaltelementen weisen die Symbolfelder 5 verschieden große bedruckbare Bereiche 16 auf. Damit wird der Gestaltungsspielraum bei den erfindungsgemäßen Schaltelementen 1 weiter vergrößert.

Nach Fig. 3 erstreckt sich der bedruckbare Bereich 16 nahezu über die gesamte Länge des Symbolfelds 5. Bei einem der nächsten Schaltelemente 15 ist der bedruckbare Bereich 16 in der Mitte des Symbolfelds 5 angeordnet. Zu beiden Seiten des bedruckbaren Bereichs 16 können strukturierte Griffflächen an dem Symbolfeld 5 oder dem Bedienelement 3 angeordnet sein, die die Bedienung erleichtern. Die weiteren in Fig. 3 dargestellten Schaltelemente 15 zeigen verschiedene Varianten von Symbolfeldern 5 und bedruckbaren Bereichen 16. Eines der Symbolfelder erstreckt sich vom einen Ende bis über die Mitte des Symbolfelds 5, während bei den anderen Schaltern die bedruckbaren Bereiche 16 am Ende des Symbolfelds 5 angeordnet sind.

Die Erfindung ist nicht auf Wippschalter beschränkt, sondern kann auch für Taster, Rastschalter und Druckschalter eingesetzt werden. Die Symbolfelder 5 können auch so gestaltet werden, dass sie um 180° verdreht eingebaut werden können.

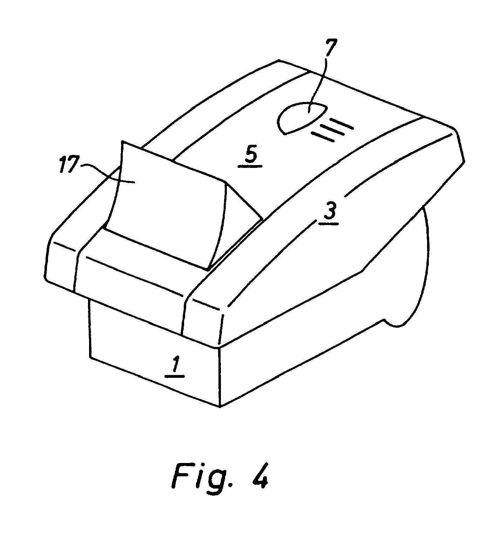

In Fig. 4 ist ein erfindungsgemäßes Schaltelement 1 dargestellt. Auf dem Bedienelement 3 sind eine Symbolleiste 5 mit einem Symbol 7 und ein Verriegelungselement 17 angeordnet. Das Verriegelungselement 17 ist in Richtung der Längsachse des Bedienelements 3 zwischen zwei in Fig. 4 nicht dargestellten Positionen verschiebbar. In einer ersten Position des Verriegelungselements 17 kann das Bedienelement 3 zwischen seinen ebenfalls nicht dargestellten Schaltstellungen hin- und herbewegt werden. In einer zweiten Position des Verriegelungselements 17 verriegelt dieses das Bedienelement 3, so dass letzteres in seiner Schaltstellung bleibt. Damit wird eine unbeabsichtigte Betätigung des Schaltelements 1 wirksam unterbunden.

## Patentansprüche

1. Schalter zum Schalten elektrischer Ströme für ein Kraftfahrzeug, mit einem Schaltelement (1), mit einem Bedienelement (3), mit Verriegelungsmitteln und mit einem Symbolfeld, wobei das Symbolfeld auf dem Bedienelement (3) angeordnet ist, wobei die Verriegelungsmittel auf dem Bedienelement (3) angeordnet sind, und wobei die Verriegelungsmittel eine oder mehrere Funktionen des Schaltelements (1) aktivieren oder deaktivieren, **dadurch gekennzeichnet, dass** das Symbolfeld (5) als separates, mit dem Bedienelement (3) verbundenes Bauteil ausgeführt ist, und dass das Symbolfeld ein oder mehrere Verriegelungsmittel aufweist.

2. Schalter nach Anspruch 1, **dadurch gekennzeichnet, dass** das Symbolfeld (5) durch eine Schnappverbindung mit dem Bedienelement (3) verbunden ist.

3. Schalter nach Anspruch 1 oder 2, **dadurch gekennzeichnet, dass** das Symbolfeld (5) lösbar mit dem Bedienelement (3) verbunden ist.

4. Schalter nach einem der vorhergehenden Ansprüche, **dadurch gekennzeichnet, dass** das Schaltelement (1) ein Wippschalter ist.

5. Schalter nach einem der Ansprüche 1 bis 3, **dadurch gekennzeichnet, dass** das Schaltelement (1) tastend ausgeführt ist.

6. Schalter nach einem der vorhergehenden Ansprüche, **dadurch gekennzeichnet, dass** das Symbolfeld (5) und/oder das Bedienelement (3) beleuchtbar sind.

7. Vorrichtung nach einem der vorhergehenden Ansprüche, **dadurch gekennzeichnet, dass** sich das Symbolfeld (5) mindestens nahezu über die gesamte Länge des Bedienelements (3) erstreckt.

## Claims

1. Switch for switching electrical currents for a motor vehicle, with a switch element (1), with an actuator (3), with locking means and with an icon display, wherein said icon display is located on the actuator (3), wherein said locking means is located on the actuator (3), and wherein said locking means activate or deactivate one or more functions of the switch elements (1), **characterized in that** the icon display (5) is implemented as a separate component attached to the actuator (3) and that the icon display is provided with one or more locking means.

2. Switch according to claim 1, **characterized in that** the icon display (5) is attached by means of a snap connector to the actuator (3).

3. Switch according to claim 1 or 2, **characterized in that** the icon display (5) is attached separably to the actuator (3).

4. Switch according to one of the preceding claims, **characterized in that** the switch (1) is a rocker switch.

5. Switch according to one of claims 1 to 3, **characterized in that** the switch (1) is designed to be touch operated.

6. Switch according to one of the preceding claims, **characterized in that** the icon display (5) and/or the actuator (3) can be illuminated.

7. Device according to one of the preceding claims, **characterized in that** the icon display (5) extends at least over almost the entire length of the actuator (3).

## Revendications

1. Commutateur destiné à commander des courants électriques pour un véhicule automobile, comportant un élément commutateur (1), un élément de commande (3), des moyens de verrouillage et une zone d'icônes, ladite zone d'icônes étant agencée sur l'élément de commande (3), les moyens de verrouillage étant agencés sur l'élément de commande (3) et les moyens de verrouillage activant ou désactivant une ou plusieurs fonctions de l'élément commutateur (1), **caractérisé en ce que** la zone d'icônes (5) est réalisée sous forme d'élément séparé, assemblé à l'élément de commande (3), et **en ce que** la zone d'icônes (5) comporte un ou plusieurs moyens de verrouillage.

2. Commutateur selon la revendication 1, **caractérisé en ce que** la zone d'icônes (5) est assemblée à l'élément de commande (3) au moyen d'un assemblage encliqueté.

3. Commutateur selon la revendication 1 ou 2, **caractérisé en ce que** la zone d'icônes (5) est assemblée de manière amovible à l'élément de commande (3).

4. Commutateur selon l'une quelconque des revendications précédentes, **caractérisé en ce que** l'élément commutateur (1) est un commutateur à bascule.

5. Commutateur selon l'une quelconque des revendications 1 à 3, **caractérisé en ce que** l'élément commutateur (1) est une touche de pression.

6. Commutateur selon l'une quelconque des revendications précédentes, **caractérisé en ce que** la zone d'icônes (5) et/ou l'élément de commande (3) peuvent être éclairés.

7. Dispositif selon l'une quelconque des revendications précédentes, **caractérisé en ce que** la zone d'icônes (5) s'étend au moins à peu près sur toute la longueur de l'élément de commande (3).
